# EUROPEAN PATENT SPECIFICATION

(11) **EP 4 704 042 B1**
(45) Date of publication and mention of the grant of the patent: **18.11.2026**
(21) Application number: 25196034.0
(22) Date of filing: 14.08.2025
(51) Int. Cl.: G06V 10/25, G06V 20/52, G06V 20/56

(54) **DEGRADATION LEVEL ACQUISITION SYSTEM**
SYSTEM ZUR ERFASSUNG DES DEGRADATIONSNIVEAUS
SYSTÈME D'ACQUISITION DE NIVEAU DE DÉGRADATION

(30) Priority: 28.08.2024 JP 2024146243
(43) Date of publication of application: 04.03.2026
(73) Proprietor: AISIN CORPORATION, Aichi 448-8650 (JP)
(72) Inventor: Kurata, Kenichi, Kariya, Aichi, 448-8650 (JP)
(74) Representative: Kramer Barske Schmidtchen Patentanwälte PartG mbB

(56) References cited:
- WO-A1-2023/166555
- JP-A- 2023 121 809
- ZHANG HAOCHENG ET AL: "RAPID INSPECTION OF PAVEMENT MARKINGS USING MOBILE LIDAR POINT CLOUDS", ISPRS - INTERNATIONAL ARCHIVES OF THE PHOTOGRAMMETRY, REMOTE SENSING AND SPATIAL INFORMATION SCIENCES, vol. XLI-B1, 6 June 2016 (2016-06-06), pages 717 - 723, XP093346521, ISSN: 2194-9034, DOI: 10.5194/isprsarchives-XLI-B1-717-2016

## Description

### TECHNICAL FIELD

The present disclosure relates to a degradation level acquisition system.

### BACKGROUND DISCUSSION

Conventionally, there is known a technique of identifying degraded paint from paint on a road. For example, Japanese Patent Application Laid-Open No. 2023-121809 discloses a technique of receiving the light emitted from the LIDAR and reflected by the paint to acquire reflection intensity data, and identifying a degraded feature on the basis of the reflection intensity data.

In the conventional technique, the reflection intensity is statistically analyzed, and whether the paint is degraded is determined on the basis of an average value µ and a standard deviation σ. However, conventionally, the degradation level of the paint cannot be identified with a simple configuration.

A need thus exists for a degradation level acquisition system that allows identification of the paint degradation level with a simple configuration.

### SUMMARY

In order to achieve the above object, a degradation level acquisition system includes: a recognition unit that recognizes a paint formed on a road; and a degradation determination unit that determines that the paint is more degraded as a perimeter-to-area ratio of the paint increases.

That is, the paint on the road has a relatively simple shape immediately after being newly formed. On the other hand, when time elapses after the paint installation, degradation progresses at different levels at various places of the boundary, or a part of the boundary is peeled off to form a hole, resulting in a complicated shape. In general, the shape becomes more complicated as the degradation progresses. When the paint degrades and its shape becomes more complex, the perimeter increases and the area decreases compared to those before degradation. Therefore, it can be determined that the paint is more degraded as the perimeter-to-area ratio of the paint increases. As a result, the degradation of the paint can be identified with a simple configuration.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a block diagram illustrating a configuration of a degradation level acquisition system;
Fig. 2A is a view illustrating an image of a non-degraded paint;
Fig. 2B is a view illustrating an image of degraded paint;
Fig. 3 is a flowchart of degradation level acquisition processing; and
Fig. 4 is a view illustrating an example of acquiring a perimeter-to-area ratio of paint.

### DETAILED DESCRIPTION

Here, embodiments of the present disclosure will be described in the following order.
(1) Configuration of degradation level acquisition system:
(2) Degradation level acquisition processing:
(3) Other embodiments:

### (1) Configuration of degradation level acquisition system:

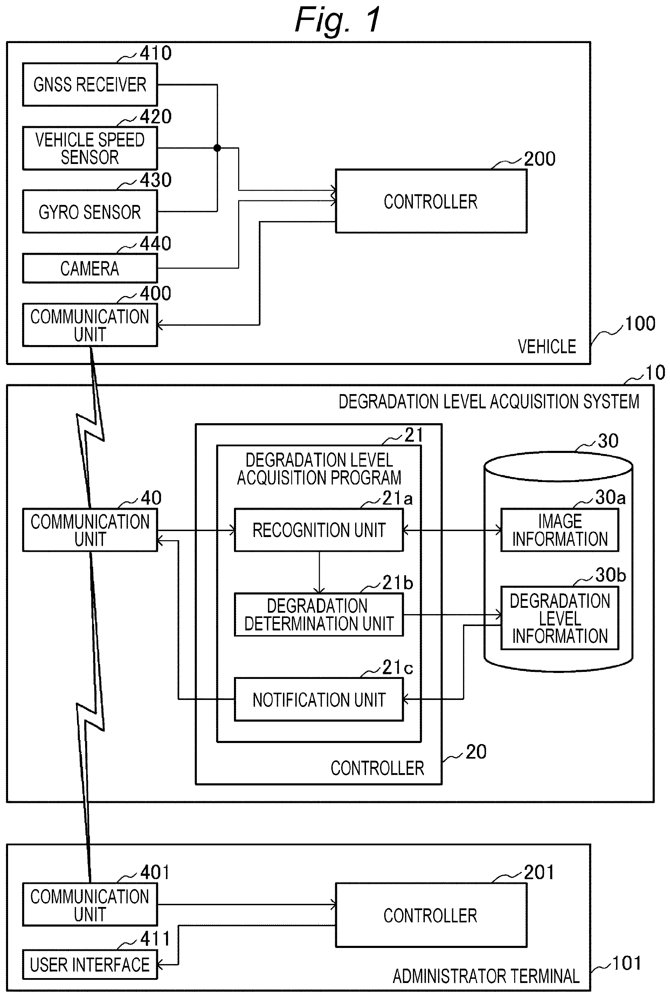

Fig. 1 is a block diagram illustrating a configuration of a degradation level acquisition system 10 according to an embodiment of the present disclosure. In the present embodiment, the degradation level acquisition system 10 is a server that can communicate with a vehicle 100 and an administrator terminal 101. The vehicle 100 has a function of capturing an image including a paint to be monitored, and transmits the captured image to the degradation level acquisition system 10. The degradation level acquisition system 10 identifies the degradation level of the paint on the basis of the image.

The administrator terminal 101 is a terminal used by an administrator who performs paint maintenance or the like. The degradation level acquisition system 10 has a function of notifying the administrator as a notification target person of the paint whose degradation level exceeds a threshold. On the basis of the information transmitted from the degradation level acquisition system 10, the administrator terminal 101 causes an user interface to display the paint whose degradation level exceeds the threshold. As a result, the administrator can recognize the degraded paint.

The vehicle 100 includes a controller 200, a communication unit 400, a GNSS receiver 410, a vehicle speed sensor 420, a gyro sensor 430, and a camera 440. The controller 200 includes a CPU, a RAM, a ROM, and the like (not illustrated), and can perform various controls according to various programs. In the present embodiment, the controller 200 controls the communication unit 400, the GNSS receiver 410, the vehicle speed sensor 420, the gyro sensor 430, and the camera 440. The communication unit 400 is a communication circuit for performing wireless communication with the degradation level acquisition system 10.

The GNSS receiver 410 is a device that receives a signal of the Global Navigation Satellite System, receives a radio wave from a navigation satellite, and outputs a signal for calculating the current position of the vehicle via an interface (not illustrated). The controller 200 acquires this signal to acquire the current position of the vehicle. The vehicle speed sensor 420 outputs a signal corresponding to the rotation speed of a wheel of the vehicle. The controller 200 acquires this signal via an interface (not illustrated) to acquire the vehicle speed. The gyro sensor 430 detects angular acceleration with respect to turning in a horizontal plane of the vehicle, and outputs a signal corresponding to a direction of the vehicle. The controller 200 acquires this signal to acquire the traveling direction of the vehicle. The vehicle speed sensor 420, the gyro sensor 430, and the like are used to identify a traveling trajectory of the vehicle. In the present embodiment, a current position is identified on the basis of a departure point and the traveling trajectory of the vehicle, and the current position of the vehicle identified on the basis of the departure point and the traveling trajectory is corrected on the basis of an output signal of the GNSS receiver 410.

The camera 440 is an image sensor for capturing an image of a road on which the vehicle 100 travels. In the present embodiment, the camera 440 is attached to the vehicle 100 so that the paint on the road is included in the field of view. The paint may be various marks formed on the road, but here, it is assumed to be a white line as a lane boundary line.

The controller 200 acquires the current location of the vehicle 100 on the basis of the output signals of the GNSS receiver 410, the vehicle speed sensor 420, and the gyro sensor 430. Furthermore, the controller 200 acquires image information of an image in which the paint has been captured, output from the camera 440. The controller 200 associates the image information with position information indicating the current location of the vehicle 100, and transmits the image information to the degradation level acquisition system 10 via the communication unit 400.

The acquisition timing and transmission timing of the image information may be various timings. For example, each time the vehicle 100 travels a certain distance or for a certain period of time, capturing may be performed by the camera 440, and image information of the captured image may be acquired and transmitted. In addition, capturing may be performed by the camera 440 in a monitoring section or a monitoring point designated in advance by a driver or the like, and image information of the captured image may be acquired and transmitted.

The degradation level acquisition system 10 includes a controller 20, a storage medium 30, and a communication unit 40. The storage medium 30 is a storage medium which allows any information to be stored. The communication unit 40 is a communication circuit for performing wireless communication with the vehicle 100 and the administrator terminal 101.

The controller 20 includes a CPU, a RAM, a ROM, and the like (not illustrated), and can perform various controls according to various programs. In the present embodiment, the program includes a degradation level acquisition program 21. When the degradation level acquisition program 21 is executed, the controller 20 functions as a recognition unit 21a, a degradation determination unit 21b, and a notification unit 21c.

The recognition unit 21a is a function of recognizing the paint formed on the road. Specifically, by the function of the recognition unit 21a, the controller 20 acquires image information 30a transmitted from the vehicle 100 via the communication unit 40, and causes the storage medium 30 to store the image information 30a. In addition, by the function of the recognition unit 21a, the controller 20 refers to the image information 30a, and executes image recognition processing on the image including the paint to extract the image of the paint. Details of the image recognition processing will be described later.

The degradation determination unit 21b is a function of determining that the paint is more degraded as the perimeter-to-area ratio of the paint increases. Specifically, by the function of the degradation determination unit 21b, the controller 20 acquires the perimeter and the area of the image of the paint on the basis of the image of the paint. Then, by the function of the degradation determination unit 21b, the controller 20 acquires the perimeter-to-area ratio as the degradation level, associates the position information indicated by the image information 30a with the degradation level, and stores the position information in the storage medium 30 as degradation level information 30b.

Since the perimeter-to-area ratio of the paint increases as the paint degrades, it can be said that it indicates the degradation level of the paint. That is, the degradation level is an index in which the numerical value increases as the paint degrades. Therefore, acquiring the degradation level by the perimeter-to-area ratio is equivalent to determining that the paint is more degraded as the degradation level, which is the perimeter-to-area ratio, increases.

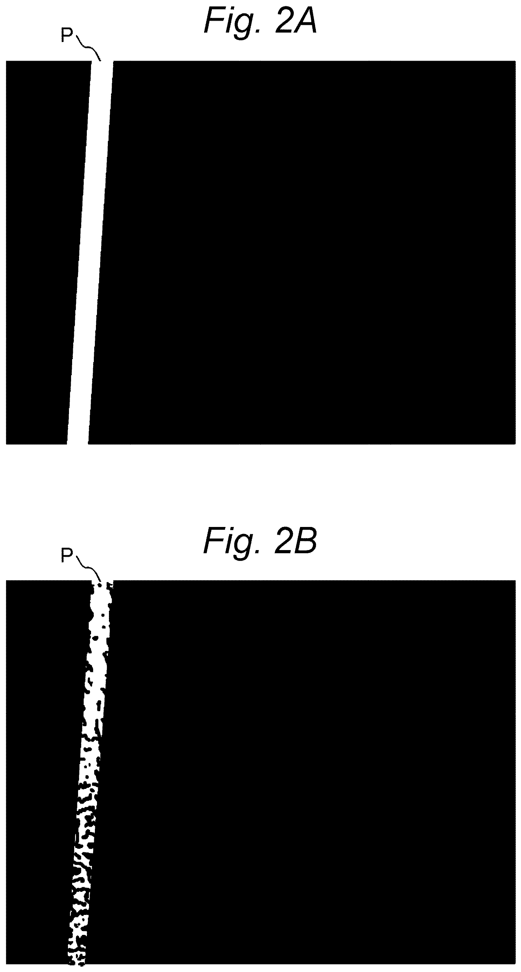

Figs. 2A and 2B are views for explaining how the paint degrades. Figs. 2A and 2B illustrate a binarized state of an image of a road including white line paint. In Fig. 2A, a white line paint P is not degraded, and in Fig. 2B, the white line paint P is degraded. As illustrated in Fig. 2A, since the non-degraded white line paint is a line having a constant width, the binarized image is recognized as a simple rectangle having the upper end and the lower end of the image as opposed sides.

On the other hand, as illustrated in Fig. 2B, in the degraded white line paint, for example, a portion where wheels are highly likely to come into contact is peel off in a relatively large amount, and the exposure of the road surface increases as compared with a portion where wheels are not highly likely to come into contact. Such degradation simultaneously progresses in a plurality of different portions, and in a portion where the degradation is likely to progress, the boundary line may lose its straightness, potentially resulting in a break in the white line. The shape changes due to degradation varies, but when degradation occurs, the boundary line becomes complicated and the area decreases.

Therefore, in degradation level, which is the perimeter-to-area ratio of the paint, the perimeter of the molecule increases as the degradation progresses, and the area of the molecule decreases as the degradation progresses. Accordingly, a higher degradation level can be regarded as indicating more advanced degradation. Note that, in a case where the white line paint is broken due to degradation, the perimeter and area decrease compared to before breaking, but as compared with a simple shape such as an artificially formed rectangle illustrated in Fig. 2A, the shape after the degradation is more disordered, and the boundary line frequently does not form a simple straight line. As a result, the perimeter becomes longer than the simple shape. Therefore, there is high possibility that the perimeter-to-area ratio of the paint in which the degradation has progressed becomes larger than that of the paint in which the degradation has not progressed.

As described above, in the present embodiment, the controller 20 acquires the perimeter-to-area ratio on the basis of the image of the paint, and regards the perimeter-to-area ratio as the degradation level. The above configuration allows the identification of the paint degradation level with a simple configuration.

The notification unit 21c is a function of notifying the notification target person in a case where the perimeter-to-area ratio of the paint is equal to or greater than the threshold. That is, when the degradation level of the paint has reached the level to which the notification should be given, the controller 20 notifies the administrator who is the notification target person of the paint. Specifically, by the function of the notification unit 21c, the controller 20 refers to the degradation level information 30b and identifies the paint whose degradation level is equal to or greater than the threshold. Note that the threshold may be any index as long as it is an index for determining whether or not the paint is in the state to be notified. In the present embodiment, a common threshold is set for all paints, but different thresholds may be set depending on the type, size, position, and the like of the paint.

In a case where there is the paint with a degradation level equal to or greater than the threshold, the controller 20 extracts the paint with the degradation level equal to or greater than the threshold. Then, the controller 20 transmits the position information of the extracted paint to the administrator terminal 101 via the communication unit 40. The administrator terminal 101 displays the notified position of the paint on a display unit of the user interface. As a result, the administrator can recognize the position of the degraded paint.

The administrator terminal 101 includes a controller 201, a communication unit 401, and a user interface 411.

The communication unit 40 is a communication circuit for performing wireless communication with the vehicle 100 and the administrator terminal 101. The controller 201 includes a CPU, a RAM, a ROM, and the like (not illustrated), and can perform various controls according to various programs. In the present embodiment, the controller 201 controls the communication unit 401 and the user interface 411.

The communication unit 401 is a communication circuit for performing wireless communication with the degradation level acquisition system 10. The user interface 411 is an interface unit for inputting a user's instruction and providing various types of information to the user, and includes the display unit, an input unit such as a keyboard and a mouse (not illustrated), and the like.

When the administrator operates the input unit to input a degraded paint display request, the controller 200 outputs a degraded paint notification request to the degradation level acquisition system 10 via the communication unit 401. When the notification request is made, the controller 20 of the degradation level acquisition system 10 refers to the degradation level information 30b and identifies the position information of paint having a degradation level equal to or greater than the threshold. Then, the controller 20 transmits the position information of the paint via the communication unit 40.

The controller 201 receives the position information via the communication unit 401. Upon receiving the position information, the controller 201 controls the display unit of the user interface 411 to display the position of the degraded paint. The aspect for displaying the paint is not limited, and various configurations can be adopted, for example, a configuration in which an icon indicating the degraded paint is displayed on a map, a configuration in which the degraded paint is sorted according to a distance from a current location and displayed in a list, and the like.

### (2) Degradation level acquisition processing:

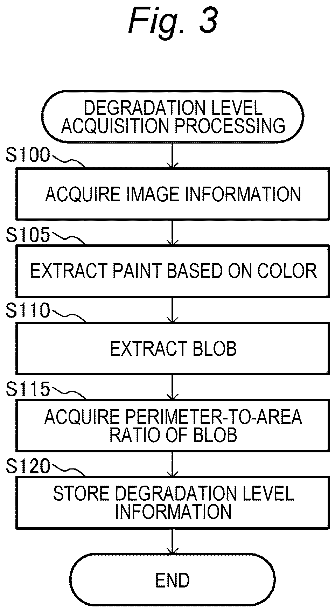

Next, degradation level acquisition processing executed by the controller 20 will be described with reference to Fig. 3. The degradation level acquisition processing is executed every time the image information is transmitted from the vehicle 100. When the degradation level acquisition processing is started, the controller 20 acquires the image information 30a by the function of the recognition unit 21a (step S100). That is, the controller 20 acquires the image information 30a transmitted from the vehicle 100 via the communication unit 40 and stores the image information in the storage medium 30.

Next, the controller 20 performs the image recognition processing for recognizing the paint on the basis of the image information 30a by the function of the recognition unit 21a. Specifically, the controller 20 refers to the image information 30a and extracts the paint on the basis of the color (step S105). That is, since the color of the paint to be monitored is known, the controller 20 refers to the color of each pixel indicated by the image information 30a and identifies a pixel matching the color of the paint to be monitored. In the present embodiment, since the color of the paint to be monitored is white, the controller 20 identifies white pixels. Note that whether or not a pixel is a white pixel may be identified by various methods, and for example, a configuration in which a pixel having a gradation value within a predetermined range for each color component (for example, red, green, and blue) is regarded as a white pixel can be adopted.

Note that, in a case where a region where the paint to be monitored can exist in the image indicated by the image information 30a is known, a target region from which the paint is extracted may be limited. For example, in the example illustrated in Figs. 2A and 2B, the paint of the white line may appear only in a specific range on the left side in the image. In this case, since the region where the paint may appear is known, processing of extracting the paint from the region in the image may be performed.

When a white pixel is extracted, the controller 20 binarizes the image by setting the extracted pixel to white and the non-extracted pixel to black. Furthermore, the controller 20 performs edge extraction processing on the binarized image and regards the edge pixel as a boundary between the paint and a road. As a result, the boundary between the paint and the road is identified, and the white pixels surrounded by the boundary are extracted as the paint.

Next, the controller 20 extracts a blob by the function of the recognition unit 21a (step S110). Here, the blob means a lump, and refers to a region where white pixels that are the color of paint are continuously present. As the processing for extracting the blob, various processes can be adopted. For example, the controller 20 sets any one of the white pixels included in the binarized image as a pixel of interest, and determines whether or not the white pixel is adjacent to the pixel of interest in a plurality of directions (for example, eight directions or four directions). In a case where white pixels are adjacent in a plurality of directions, the controller 20 regards the adjacent white pixels as the same blob as the pixel of interest.

In a case where it is determined that white pixels are adjacent to the pixel of interest in a plurality of directions, the controller 20 repeats a similar processing using any of the white pixels adjacent to the pixel of interest as a new pixel of interest. In a case where it is determined that white pixels are not adjacent to the pixel of interest in a plurality of directions, the controller 20 selects a new pixel of interest from among white pixels not included in the existing blob, and repeats similar processing. The controller 20 repeats the above processing until there is no white pixel to be a pixel of interest. According to the above processing, the pixels constituting the image of the paint are classified into one or more blobs. Thus, even if the linear paint is separated by degradation, it can be defined as separate and distinct blobs and define the perimeter and area for each blob.

Next, the controller 20 acquires the perimeter-to-area ratio of the blob by the function of the degradation determination unit 21b (step S115). That is, the controller 20 acquires the degradation level indicated by the perimeter-to-area ratio for each of the blobs extracted in step S110. Specifically, for each blob, the controller 20 identifies the perimeter by the number of pixels constituting the outermost peripheral portion, identifies the area by the number of pixels constituting the portion excluding the outermost peripheral portion of the blob, and acquires the perimeter-to-area ratio.

Next, the controller 20 stores the degradation level information 30b by the function of the degradation determination unit 21b (step S120). That is, the controller 20 associates the position information indicating the position where the image information 30a is captured with each of the perimeter-to-area ratio acquired in step S115, and stores the position information in the storage medium 30 as the degradation level information 30b. When the degradation level information 30b is defined for the same position (or two positions where the distance is equal to or less than the threshold), the original degradation level information 30b may be updated by the latest degradation level information 30b.

According to the above processing, the degradation level information 30b can be defined for each of the paints included in the image captured by the vehicle 100 and stored in the storage medium 30. Therefore, the administrator can receive a notification of the degraded paint by making a request to display the degraded paint at any timing. In addition, the position of the degraded paint can be identified.

### (3) Other embodiments:

The above embodiment is an example for carrying out the present disclosure, and various other embodiments can be adopted. For example, at least a part of the recognition unit 21a, the degradation determination unit 21b, and the notification unit 21c constituting the degradation level acquisition system may be divided into a plurality of devices. As such an example, for example, a configuration in which a part of the function of each unit is realized by an on-vehicle device mounted on the vehicle 100 is assumed. The degradation level acquisition system 10 may be implemented by an on-vehicle device. In this case, the administrator terminal 101 may be realized by the on-vehicle device or may be realized as a terminal other than the on-vehicle device. Of course, embodiments of various aspects such as a configuration in which a part of the above-described embodiments is omitted or a configuration in which the order of processing is changed or omitted may be realized.

The recognition unit only needs to be able to recognize the paint formed on the road. That is, it is sufficient for the recognition unit to be able to distinguish between the paint on the road and non-paint portions. The recognition may be performed on the basis of information acquired by various sensors. The sensor is not limited to the camera as in the above-described embodiment. For example, the road may be irradiated with detection light by a sensor such as light detection and ranging (LIDAR) including a light source, and reflected light may be acquired to recognize the paint. In addition, typically, a visible light camera that can detect a plurality of colors can be used as the camera, but various cameras that acquire an image of a road including the paint illuminated with natural light, such as a monochrome camera and an infrared camera, can be adopted.

The degradation determination unit only needs to be able to determine that the paint is more degraded as the perimeter-to-area ratio of the paint increases. When the paint degrades, a part of the paint peels off to expose the road. As a result, the shape of the boundary between the paint and the road becomes complicated, or a hole is formed due to peeling. As such degradation progresses, the perimeter of the paint increases and the area decreases. Therefore, when the perimeter-to-area ratio is identified as the degradation level, it can be determined that the paint is degraded as the value of the degradation level increases. The perimeter may be a length of a boundary line between the paint and another feature (typically, a road), and may be counted by various methods. The area may be the size of the painted portion existing inside the boundary line, and may be counted by various methods.

The degradation level defined by the perimeter-to-area ratio may be used for comparison with a reference, or may be used for evaluating degradation according to the magnitude of the value. As the former, a configuration can be adopted in which the degradation level is compared on the basis of the degradation level of the paint before degradation, the degradation level of another paint, or the like.

The area of the paint may be an index that can evaluate the area inside the boundary between the paint and the road. Therefore, the degradation determination unit may extract the region inside the boundary according to a predetermined rule and acquire the area of the extracted portion as the area of the paint. The predetermined rule can adopt various rules. For example, a rule for extracting a range of a certain distance from the boundary line inside the boundary line and measuring the area of the extracted portion can be adopted as a predetermined rule.

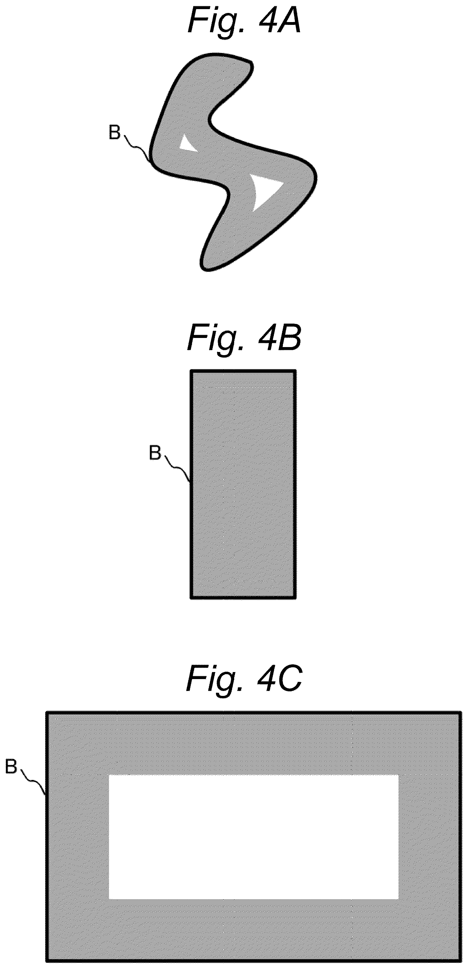

Figs. 4A to 4C are views illustrating such an example. In Figs. 4A to 4C, a boundary line B between the paint and the road is indicated by a black solid line. Inside the boundary line B, a range of a certain distance from the boundary line B is colored in gray. The range can be defined by, for example, making the center of a circle having the same radius as the certain distance coincide with the boundary line B and moving the circle along the boundary line B while maintaining a state in which the center coincides with the boundary line B. That is, a portion through which the circle passes inside the boundary line B is a range of a certain distance from the boundary line B inside the boundary line B.

When the area is identified as described above, the degradation level of the paint is acquired on the basis of the perimeter-to-area ratio of the paint. The above processing prevents the range of values that the degradation level of non-degraded paint can take from becoming excessively large. For example, the value of the degradation level illustrated in Fig. 4C is larger than the case where the entire region inside the boundary line B is acquired as an area, and is close to the value of the degradation level in the example illustrated in Fig. 4B. For this reason, in Figs. 4B and 4C, which are not degraded but have different sizes, the degradation levels can be defined as equivalent values. Therefore, the degradation level can be easily evaluated by the value of the degradation level.

The notification unit only needs to be able to notify the notification target person in a case where the perimeter-to-area ratio of the paint is equal to or larger than the threshold. The threshold may be any criterion as long as it is a criterion for determining whether or not the degradation level indicated by the perimeter-to-area ratio is the level to which the notification is required. The threshold may be determined by various methods, for example, may be determined according to the type of paint (lane boundary line, stop line, speed mark, and the like) or may be determined according to the size of paint (area or the like). In addition, the notification may be performed by various methods. For example, information indicating the degradation level may be transmitted to the administrator terminal, and information (numerical value indicating degradation level or bar graph, icon colored according to degradation level, and the like) by which the degradation level can be visually recognized may be displayed on the administrator terminal.

Further, the degradation level may be defined by the perimeter-to-area ratio and other indexes. For example, in the above-described configuration illustrated in Fig. 1, the recognition unit 21a may recognize a region (blob) where pixels of the color of the paint are continuously present as the paint, and the degradation determination unit 21b may determine that the paint is more degraded as the number of regions increases.

That is, as the degradation progresses, the paint may be broken as illustrated in Fig. 2B. Therefore, when degradation occurs, there is a high possibility that the number of blobs existing independently increases as compared with a case where no degradation occurs. Therefore, the controller 20 counts the number of extracted blobs after step S110 of the degradation level acquisition processing illustrated in Fig. 3 described above. Then, in step S120, the controller 20 defines the degradation level information 30b such that the value increases as the number of blobs increases.

The degradation level information 30b may be defined by various methods such that the value increases as the number of blobs increases. For example, a configuration can be adopted in which a term whose value increases as the number of blobs increases is added to the degradation level obtained from the perimeter-to-area ratio, or one or more numbers whose values increase as the number of blobs increases are multiplied by the degradation level obtained from the perimeter-to-area ratio. In addition, the controller 20 may identify the degradation level for each of the plurality of blobs on the basis of the perimeter-to-area ratio, and define the degradation level identified on the basis of the number of blobs as a common value in all of the plurality of blobs existing in proximity. In any case, the degradation level can be more accurately determined by evaluating the degradation level on the basis of the number of blobs.

Furthermore, as in the present disclosure, the method of determining the degradation level of the paint on the basis of the perimeter-to-area ratio of the paint can also be applied as a program or a method. In addition, the system, the program, and the method as described above may be implemented as a single device or may be implemented by using a component shared with each unit included in the vehicle, and include various aspects. In addition, it can be changed as appropriate such that a part is software and a part is hardware. Furthermore, the disclosure is also established as a recording medium of a program for controlling the system. Of course, the recording medium of the program may be a magnetic recording medium or a semiconductor memory, and can be considered in exactly the same manner in any recording medium to be developed in the future.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A degradation level acquisition system (10) comprising:
a recognition unit (21a) that recognizes a paint formed on a road; and
a degradation determination unit (21b) that determines that the paint is more degraded as a perimeter-to-area ratio of the paint increases.

2. The degradation level acquisition system (10) according to Claim 1, wherein
the recognition unit (21a) recognizes the paint based on an image of a road captured by a camera (440).

3. The degradation level acquisition system (10) according to Claim 1 or 2, wherein
the recognition unit (21a) recognizes a region where a pixel of a color of the paint is continuously present as the paint, and
the degradation determination unit (21b) determines that the paint is more degraded as the number of the regions increases.

4. The degradation level acquisition system (10) according to any one of Claims 1 to 3, further comprising a notification unit (21c) that notifies a notification target person in a case where a perimeter-to-area ratio of the paint is equal to or larger than a threshold.

## Patentansprüche

1. Degradationsniveau-Erfassungssystem (10), das aufweist:
eine Erkennungseinheit (21a), die einen auf einer Straße ausgebildeten Anstrich erkennt; und
eine Degradationsbestimmungseinheit (21b), die bestimmt, dass der Anstrich umso stärker degradiert ist, je mehr ein Umfang-zu-Fläche-Verhältnis des Anstrichs zunimmt.

2. Degradationsniveau-Erfassungssystem (10) nach Anspruch 1, wobei
die Erkennungseinheit (21a) den Anstrich auf der Grundlage eines Bildes einer Straße, das von einer Kamera (440) aufgenommen ist, erkennt.

3. Degradationsniveau-Erfassungssystem (10) nach Anspruch 1 oder 2, wobei
die Erkennungseinheit (21a) einen Bereich, in dem ein Pixel einer Farbe des Anstrichs kontinuierlich vorhanden ist, als den Anstrich erkennt, und
die Degradationsbestimmungseinheit (21b) bestimmt, dass der Anstrich umso stärker degradiert ist, je mehr die Anzahl der Bereiche zunimmt.

4. Degradationsniveau-Erfassungssystem (10) nach einem der Ansprüche 1 bis 3, das ferner eine Benachrichtigungseinheit (21c) aufweist, die eine Benachrichtigungszielperson in einem Fall benachrichtigt, in dem ein Umfang-zu-Fläche-Verhältnis des Anstrichs gleich oder größer als ein Schwellenwert ist.

## Revendications

1. Système d'acquisition de niveau de dégradation (10) comprenant :
une unité de reconnaissance (21a) qui reconnaît une peinture appliquée sur une route ; et
une unité de détermination de dégradation (21b) qui détermine que la peinture est d'autant plus dégradée qu'un rapport périmètre/surface de la peinture augmente.

2. Système d'acquisition de niveau de dégradation (10) selon la revendication 1, dans lequel
l'unité de reconnaissance (21a) reconnaît la peinture sur la base d'une image d'une route capturée par une caméra (440).

3. Système d'acquisition de niveau de dégradation (10) selon la revendication 1 ou 2, dans lequel
l'unité de reconnaissance (21a) reconnaît comme peinture une région dans laquelle un pixel de la couleur de la peinture est présent de manière continue, et
l'unité de détermination de dégradation (21b) détermine que la peinture est d'autant plus dégradée que le nombre des régions augmente.

4. Système d'acquisition de niveau de dégradation (10) selon l'une quelconque des revendications 1 à 3, comprenant en outre une unité de notification (21c) qui avertit une personne cible de notification dans le cas où un rapport périmètre/surface de la peinture est égal ou supérieur à un seuil.
